# DEMANDE DE BREVET EUROPEEN

(11) **EP 4 644 256 A1**
(43) Date de publication de la demande: **05.11.2025**
(21) Numéro de dépôt: 25172436.5
(22) Date de dépôt: 24.04.2025
(51) Int. Cl.: B64D 33/02, B64D 27/18

(54) **LÈVRE D'ENTRÉE D'AIR POUR UNE NACELLE D'UN TURBORÉACTEUR DOUBLE FLUX D'AÉRONEF**

(30) Priorité: 29.04.2024 FR 2404463
(71) Demandeur: Airbus (S.A.S.), 31700 Blagnac (FR); AIRBUS OPERATIONS (S.A.S.), 31060 Toulouse (FR)
(72) Inventeur: MOGILKA, Philippe, 31700 BLAGNAC (FR); PARCELIER, Benoit, 31060 TOULOUSE (FR)
(74) Mandataire: Cabinet Le Guen Maillet

(57) **Abrégé**

L'invention concerne une lèvre (100) d'entrée d'air (102) d'une nacelle (150) d'aéronef qui comporte une paroi extérieure (104) formant une surface cylindrique autour d'un premier axe longitudinal (X1), une paroi intérieure (106) formant une surface cylindrique autour d'un deuxième axe longitudinal (X2) et présentant un col (106a), où au niveau du col (106a), les épaisseurs (e1, e2) entre la paroi extérieure (104) et la paroi intérieure (106) au niveau des intersections avec un plan passant par le premier axe longitudinal (X1) et parallèle à un axe transversal (Y'), sont différentes.

Avec un tel arrangement, une bonne orientation de l'écoulement est conservée en aval de la lèvre d'entrée d'air avec une entrée d'air localement plus fine et ceci sans rogner sur la résistance mécanique de la lèvre.

## Description

### DOMAINE TECHNIQUE

La présente invention concerne une lèvre d'entrée d'air pour une nacelle d'un turboréacteur double flux d'aéronef, une nacelle comportant une telle lèvre, un turboréacteur double flux d'aéronef équipé d'une telle nacelle ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. La nacelle comporte à l'avant, une entrée d'air par laquelle l'air extérieur pénètre dans le turboréacteur double flux pour alimenter le moteur. L'entrée d'air est délimitée par une lèvre prenant globalement une forme annulaire avec une section en U autour d'un axe longitudinal du turboréacteur double flux et l'épaisseur de la lèvre est identique entre le côté bâbord et le côté tribord de l'entrée d'air à une hauteur donnée.

À la suite de la lèvre, la nacelle comporte une pluralité de capots qui entourent le moteur et forment une surface aérodynamique autour dudit moteur.

Le document US-A-2011/284095 montre une lèvre d'entrée d'air pour une nacelle de l'état de la technique.

Bien qu'une telle lèvre donne satisfaction, il est possible de l'améliorer, en particulier pour conserver une bonne orientation de l'écoulement en aval de la lèvre d'entrée d'air.

### EXPOSÉ DE L'INVENTION

Un objet de la présente invention est de proposer une lèvre d'entrée d'air pour une nacelle d'un turboréacteur double flux d'un aéronef, où la lèvre présente une dissymétrie permettant de conserver une bonne orientation de l'écoulement en aval de la lèvre d'entrée d'air sans rogner sur la résistance mécanique de la lèvre en particulier lorsqu'elle est soumise à un vent de travers.

À cet effet, est proposée une lèvre d'entrée d'air d'une nacelle d'un turboréacteur double flux d'un aéronef, ladite lèvre présentant un axe transversal horizontal et comportant :
- une paroi extérieure formant une surface cylindrique autour d'un premier axe longitudinal, et
- une paroi intérieure formant une surface cylindrique autour d'un deuxième axe longitudinal, où la paroi intérieure est à l'intérieur de la paroi extérieure, et présente un col,
où au niveau du col, les épaisseurs entre la paroi extérieure et la paroi intérieure au niveau des intersections avec un plan passant par le premier axe longitudinal et parallèle à l'axe transversal, sont différentes.

Avec un tel arrangement, une bonne orientation de l'écoulement est conservée en aval de la lèvre d'entrée d'air avec une entrée d'air localement plus fine et ceci sans rogner sur la résistance mécanique de la lèvre.

Avantageusement, le rapport entre l'épaisseur la plus grande et l'épaisseur la plus petite est compris entre 1,5 et 2.

L'invention propose également une nacelle d'un turboréacteur double flux d'un aéronef comportant au niveau d'une partie avant, une lèvre selon l'une des variantes précédentes. L'invention propose également un turboréacteur double flux d'un aéronef comportant un moteur et une nacelle selon la variante précédente, où le moteur est logé dans la nacelle.

L'invention propose également un aéronef comportant un fuselage, de part et d'autre du fuselage, une aile, et fixé à chaque aile, un turboréacteur double flux selon la variante précédente, où pour chaque turboréacteur double flux, l'épaisseur la plus fine de la lèvre est disposée du côté du fuselage.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de dessus d'un aéronef équipé d'un turboréacteur double flux présentant une lèvre d'entrée d'air selon l'invention,
[Fig. 2] est une représentation schématique en vue de face d'une lèvre d'entrée d'air selon l'invention, et
[Fig. 3] est une représentation schématique en vue de dessus d'un turboréacteur double flux tribord présentant une lèvre d'entrée d'air selon l'invention.

### EXPOSÉ DÉTAILLÉ DE MODES DE RÉALISATION

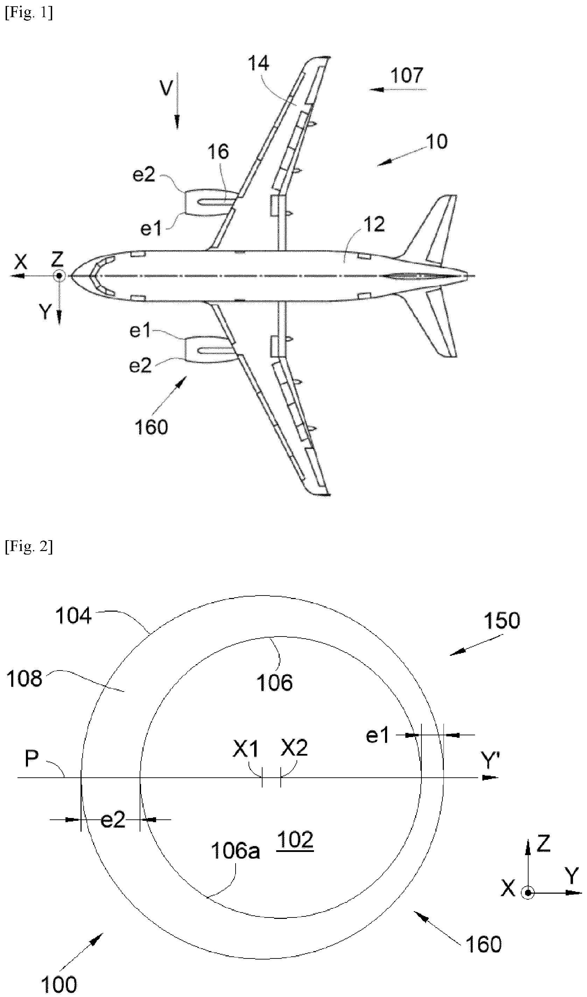

La Fig. 1 montre un aéronef 10 qui comporte un fuselage 12 de chaque côté duquel est fixée une aile 14 et chaque aile 14 porte au moins un turboréacteur double flux 160. La fixation du turboréacteur double flux 160 à l'aile 14 est assurée par un mât 16.

Dans la description qui suit, et par convention, on appelle X l'axe longitudinal de l'aéronef 10 ou axe de roulis, orienté positivement dans le sens d'avancement de l'aéronef 10, on appelle Y l'axe transversal qui est parallèle à l'axe de tangage de l'aéronef 10 qui est horizontal lorsque l'aéronef 10 est au sol, et Z l'axe vertical qui est parallèle à l'axe de lacet et qui est vertical lorsque l'aéronef 10 est au sol, ces trois directions X, Y et Z étant orthogonales entre elles. Dans la description qui suit, les termes relatifs à une position sont pris en référence à un aéronef 10 en position d'avancement comme il est représenté sur la Fig. 1 et où la flèche 107 montre la direction d'avancement de l'aéronef 10 en vol.

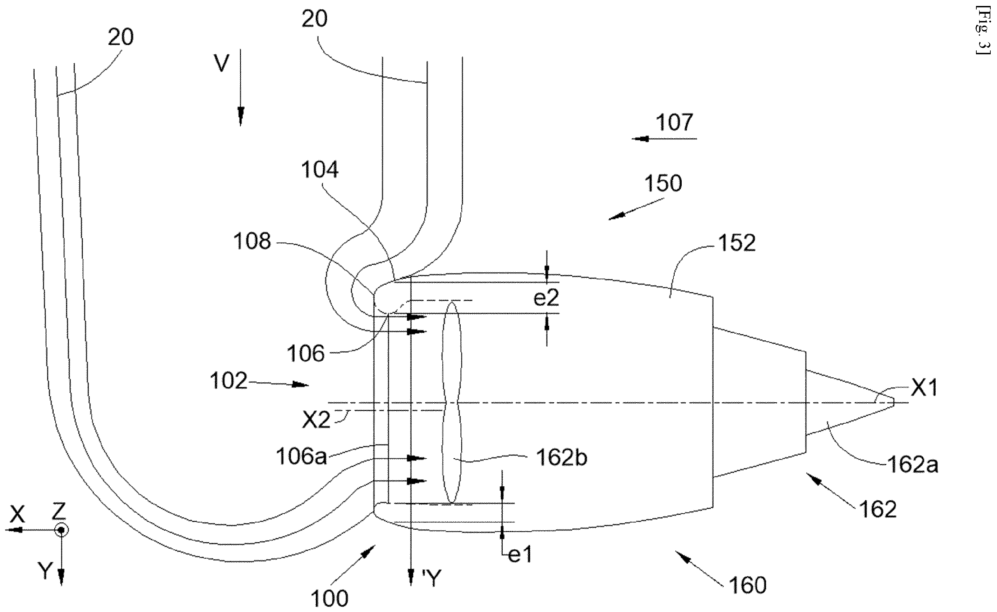

La Fig. 3 montre le turboréacteur double flux 160 qui est monté à tribord sur l'aéronef 10 et qui comporte une nacelle 150 et un moteur 162 logé dans la nacelle 150 et représenté ici par son cône d'éjection 162a à l'arrière et par sa soufflante 162b à l'avant.

La nacelle 150 comporte au niveau d'une partie avant, une lèvre 100 selon l'invention qui délimite une entrée d'air 102 par laquelle l'air extérieur pénètre dans la nacelle 150 pour alimenter le moteur 162 en passant à travers la soufflante 162b. La lèvre 100 présente alors un axe transversal Y' parallèle à l'axe transversal Y de l'aéronef 10 et donc horizontal.

La Fig. 2 montre une vue de face de la lèvre 100.

La lèvre 100 comporte une paroi extérieure 104 qui forme une surface cylindrique autour d'un premier axe longitudinal X1 qui est ici parallèle à l'axe longitudinal X. La nacelle 150 comporte également des capots 152 qui sont fixés à l'arrière de la paroi extérieure 104 et qui forment une surface extérieure aérodynamique. Le premier axe longitudinal X1 est ici l'axe de rotation de la soufflante 162b.

La lèvre 100 comporte également une paroi intérieure 106 (en traits pointillés) qui forme également une surface cylindrique autour d'un deuxième axe longitudinal X2 et où la paroi intérieure 106 est à l'intérieur de la paroi extérieure 104. La paroi intérieure 106 délimite la surface de l'entrée d'air 102 par laquelle l'air pénètre et elle présente un col 106a où la surface de l'entrée d'air 102 est la plus étroite.

Les deux axes longitudinaux X1 et X2 sont tous les deux globalement orientés de l'avant vers l'arrière du turboréacteur double flux 160.

Dans le mode de réalisation de l'invention présenté ici, les profils de la paroi intérieure 106 et de la paroi extérieure 104 sont circulaires, mais ils peuvent être elliptiques ou autres.

La lèvre 100 comporte également une paroi frontale 108 qui est donc à l'avant par rapport à la paroi extérieure 104 et la paroi intérieure 106 et qui prend une forme arrondie et constitue le bord d'attaque de la nacelle 150.

La paroi frontale 108 relie la paroi extérieure 104 et la paroi intérieure 106 pour fermer l'espace entre eux. La paroi frontale 108, la paroi extérieure 104 et la paroi intérieure 106 peuvent former un ensemble monobloc ou être constituées de plusieurs parties distinctes fixées les unes aux autres.

La paroi frontale 108 fait ainsi le tour de l'entrée d'air 102.

Selon l'invention, au niveau du col 106a, les épaisseurs e1 et e2 entre la paroi extérieure 104 et la paroi intérieure 106 au niveau des intersections avec un plan P passant par le premier axe longitudinal X1 et parallèle à l'axe transversal Y, sont différentes. Le plan horizontal P est défini lorsqu'un turboréacteur double flux 160 est fixé à l'aile 14 et que l'aéronef 10 est au sol. Ici, le plan P passe également par le deuxième axe longitudinal X2. L'épaisseur e1 est la plus petite et l'épaisseur e2 est la plus grande.

Dans la mise en place sur l'aéronef 10, pour chaque turboréacteur double flux 160, l'épaisseur e1 la plus fine de la lèvre 100 est disposée du côté du fuselage 12 tandis que l'épaisseur e2 la plus épaisse est disposée du côté opposé au fuselage 12.

Dans l'exemple des Figs. 1 et 3, l'aéronef 10 est soumis à un vent de travers représenté par la flèche V (ici un vent allant de tribord à bâbord). Pour le turboréacteur double flux 160 qui est à tribord, l'épaisseur e2 qui est la plus épaisse est soumise directement au vent de travers V et du fait de son épaisseur e2, la lèvre 100 peut encaisser les efforts sans se déformer. Pour le turboréacteur double flux 160 qui est à tribord, l'épaisseur e1 qui est la plus fine n'est pas soumise directement au vent de travers V mais son épaisseur moindre permet d'agrandir la surface de captation de l'entrée d'air 102 sans risque structurel. Pour le turboréacteur double flux 160 qui est à bâbord, l'épaisseur e2 qui est la plus épaisse est à l'extérieur et n'est pas soumise au vent de travers V. Pour le turboréacteur double flux 160 qui est à bâbord, l'épaisseur e1 qui est la plus fine n'est pas soumise directement au vent de travers V du fait qu'elle est protégée par le fuselage 12 qui fait barrière au vent de travers V. Un tel arrangement permet ainsi de conserver une bonne orientation de l'écoulement en aval de la lèvre d'entrée d'air avec une entrée d'air localement plus fine.

Les lignes 20 représentent les lignes de flux d'air dues au vent de travers V.

Bien sûr, en cas d'inversion du vent de travers, le résultat est le même mais de manière symétriquement inversée pour les deux turboréacteurs double flux 160.

L'épaisseur e2 la plus épaisse est équivalente à l'épaisseur pour un turboréacteur double flux de l'état de la technique, mais l'épaisseur e1 la plus fine est réduite par rapport à l'épaisseur pour un turboréacteur double flux de l'état de la technique.

Selon un mode de réalisation particulier, la paroi extérieure 104 est la même qu'une paroi extérieure pour un turboréacteur double flux de l'état de la technique, mais la paroi intérieure 106 est déformée par rapport à une paroi intérieure pour un turboréacteur double flux de l'état de la technique de manière à être rapprochée de la paroi extérieure 104 du côté opposé au fuselage 12.

Selon un mode de réalisation particulier, le rapport entre l'épaisseur la plus grande e2 et l'épaisseur la plus petite e1 est compris entre 1,5 et 2.

## Revendications

1. Lèvre (100) d'entrée d'air (102) d'une nacelle (150) d'un turboréacteur double flux (160) d'un aéronef (10), ladite lèvre (100) présentant un axe transversal (Y') horizontal et comportant :
- une paroi extérieure (104) formant une surface cylindrique autour d'un premier axe longitudinal (X1), et
- une paroi intérieure (106) formant une surface cylindrique autour d'un deuxième axe longitudinal (X2), où la paroi intérieure (106) est à l'intérieur de la paroi extérieure (104), et présente un col (106a),
où au niveau du col (106a), les épaisseurs (e1, e2) entre la paroi extérieure (104) et la paroi intérieure (106) au niveau des intersections avec un plan (P) passant par le premier axe longitudinal (X1) et parallèle à l'axe transversal (Y'), sont différentes.

2. Lèvre (100) selon la revendication 1, **caractérisée en ce que** le rapport entre l'épaisseur la plus grande (e2) et l'épaisseur la plus petite (e1) est compris entre 1,5 et 2.

3. Nacelle (150) d'un turboréacteur double flux (160) d'un aéronef (10) comportant au niveau d'une partie avant, une lèvre (100) selon l'une des revendications précédentes.

4. Turboréacteur double flux (160) d'un aéronef (10) comportant un moteur (162) et une nacelle (150) selon la revendication précédente, où le moteur (162) est logé dans la nacelle (150).

5. Aéronef (10) comportant un fuselage (12), de part et d'autre du fuselage (12), une aile (14), et fixé à chaque aile (14), un turboréacteur double flux (160) selon la revendication 4, où pour chaque turboréacteur double flux (160), l'épaisseur (e1) la plus fine de la lèvre (100) est disposée du côté du fuselage (12).
